# EUROPEAN PATENT SPECIFICATION

(11) **EP 2 818 700 B1**
(45) Date of publication and mention of the grant of the patent: **29.06.2016**
(21) Application number: 12871698.2
(22) Date of filing: 19.04.2012
(51) Int. Cl.: F03B 3/10, F03B 13/06, F03D 9/00, F03D 9/11, F03D 9/14

(54) **WIND POWER GENERATION SYSTEM**
WINDENERGIEERZEUGUNGSSYSTEM
SYSTÈME DE GÉNÉRATION D'ÉNERGIE ÉOLIENNE

(30) Priority: 19.03.2012 JP 2012062770
(43) Date of publication of application: 31.12.2014
(73) Proprietor: Kyowa Engineering Consultants Co., Ltd., Tokyo 151-0073 (JP)
(72) Inventor: KANEMOTO Toshiaki, Kitakyushu-shi Fukuoka 802-0972 (JP); MURAKAMI Tengen, kitakyushu-shi Fukuoka 804-0011 (JP); SAMURA Isao, Tokyo 151-0073 (JP)
(74) Representative: Prüfer & Partner mbB Patentanwälte · Rechtsanwälte
(86) International application number: PCT/JP2012/060549
(87) International publication number: WO 2013/140635

(56) References cited:
- CN-A- 101 656 423
- CN-U- 201 865 851
- CN-U- 201 972 859
- JP-A- S5 478 425
- JP-A- S53 117 147
- JP-A- 2001 107 900
- JP-A- 2002 364 517
- JP-A- 2003 314 430

## Description

### Technical Field

The present invention relates to a wind power generation system comprising a wind turbine power generation mechanism and a charge/discharge device, wherein charging of the charge/discharge device with output power of the wind turbine power generation mechanism works cooperatively with discharging of the power through the charge/discharge device to a distribution system so as to smooth the power output to the distribution system.

### Background Art

CN 201 865 851 U discloses a power generation system comprising a solar-energy photovoltaic power-generation device, a wind-power power-generation device, a miniature water-power power-generation device, an electric power pump, a power-accumulation device, a master controller and a diesel generator. The solar-energy photovoltaic power-generation device, the wind-power power-generation device, the miniature water-power power-generation device, the electric power pump, the power-accumulation device and the diesel generator are connected with the master controller by cables, and the master controller is connected with a power grid by a cable.

JP 2001 107900 A discloses a pump device with a pump part in which a pair of impellers circumferentially reversely rotating each other are coaxially disposed in a pump casing and a driving motor part having internal and external double rotor type electric motor.

CN 201 972 859 U discloses a wind-solar hybrid power generation and energy storage device comprising a wind turbine, a photovoltaic array, a controller and a storage battery, wherein the wind turbine, the photovoltaic array and the storage battery are all connected with the controller. A pumped-storage power generation device comprising a lower reservoir, an upper reservoir and a pipeline connecting the upper and the lower reservoirs is further connected to the controller. A reversible pump turbine is arranged on the pipeline and provided with a first working condition of pumping water of the lower reservoir to the upper reservoir and a second working condition of moving the water of the upper reservoir down to the lower reservoir to be used for generating power. CN 101 656 423 A discloses a light-wind-water complementary type water pumping and energy storing power generation peak adjusting device. The device comprises an upper water storage reservoir built on the mountain top, a lower water storage reservoir built in a valley, a solar energy photovoltaic cell board on the mountain slope, wind power generation fields on the mountain top, a water pumping and energy storing power generation peak adjusting power station between the upper and the lower water storage reservoirs and a water station provided in the lower water storage reservoir. A water inlet pipe and a water outlet pipe of the water pumping and energy storing power generation peak adjusting power station are respectively communicated with the lower and the upper water storage reservoirs.

Patent documents No. 1 and No. 2 disclose wind power generation systems, each comprising a wind turbine power generation mechanism and a charge/discharge device, wherein charging of the charge/discharge device with output power of the wind power generation mechanism works cooperatively with discharging of the power through the charge/discharge device to a distribution system so as to smooth the power output to the distribution system.

### Prior Art Documents

### Patent Documents

Patent Document No.1: Japanese Patent Laid-Open No. 2010-071159
Patent Document No.2: Japanese Patent Laid-Open No. 2010-159661

### Disclosure of invention

### Problem to be solved

The power output of the wind turbine power generation mechanism fluctuates greatly at every moment. Therefore, the charge/discharge device, which is charged with surplus power from the wind turbine power generation mechanism, needs to be increased in capacity so as to smooth power output to the distribution system. However, increasing the capacity of the charge/discharge device increases the production cost of the wind power generation system, because the charge/discharge device is usually expensive, and thus impedes wide use of wind power generation systems.

Therefore, an object of the present invention is to provide a wind power generation system comprising a wind turbine power generation mechanism and a charge/discharge device, wherein charging of the charge/discharge device with output power of the wind turbine power generation mechanism works cooperatively with discharging of the power through the charge/discharge device to a distribution system so as to smooth the power output to the distribution system, and wherein smoothing of the power output to the distribution system is stably achieved without requiring capacity increase of the charge/discharge device.

### Means for Achieving the Object

In accordance with the present invention, there is provided a wind power generation system comprising a wind turbine power generation mechanism and a charge/discharge device, wherein charging of the charge/discharge device with output power of the wind power generation mechanism works cooperatively with discharging of the power through the charge/discharge device to a distribution system so as to smooth the power output to the distribution system, and further comprising a pumped-storage power generation mechanism, and wherein pumping up of water by the pumped-storage power generation mechanism supplied with power from the charge/discharge device or hydraulic power generation using a head of pumped water by the pumped-storage power generation mechanism and transmission of output power to the charge/discharge device is selectively carried out at a relatively short predetermined time cycle of a few tens of seconds to a few minutes based on mean wind power generation output value during a preceding time cycle and power storage quantity of the charge/discharge device at the end of the preceding time cycle.

In the wind power generation system of the present invention, surplus power from the wind turbine power generation mechanism is accumulated in the charge/discharge device and also converted to potential energy of stored water of the pumped-storage power generation mechanism and accumulated as potential energy of stored water. As a result, it becomes possible, as needed, to discharge to the distribution system not only output of the wind turbine power generation mechanism but also output of hydraulic power generation using the head of water pumped by the pumped-storage power generation mechanism. Thus, smoothing of the power output to the distribution system is achieved without requiring increase of the capacity of the charge/discharge device.

Conventionally, pumped-storage power generation has been used for smoothing power supply over a long timespan such as a day, night, etc. On the other hand, in the present invention, the pumped-storage power generation is used for smoothing moment-to-moment fluctuation of power output of the wind turbine power generation by selectively carrying out, at a relatively short predetermined time cycle of a few tens of seconds to a few minutes, pumping up of water by the pumped-storage power generation mechanism supplied with electric power through the charge/discharge device or the hydraulic power generation using the head of water pumped by the pumped-storage power generation mechanism and transmission of output power of the hydraulic power generation to the charge/discharge device. The present invention thus proposes a new application of pumped-storage power generation.

The power output of a wind turbine power generation system often fluctuates between peak and trough values in a relatively short time cycle of a few tens of seconds to a few minutes. Therefore, it is reasonable to selectively carry out pumping up of water by the pumped-storage power generation mechanism supplied with electric power through the charge/discharge device or the hydraulic power generation using the head of water pumped by the pumped-storage power generation mechanism and transmission of output power of the hydraulic power generation to the charge/discharge device at a relatively short predetermined time cycle of a few tens of seconds to a few minutes.

When the aforementioned selection is carried out by a feedback system based on mean wind power generation output value during the preceding time cycle and the power storage quantity of the charge/discharge device at the end of the preceding time cycle, it becomes possible to carry out the aforementioned selection based on the moment-to-moment fluctuation of the power output of the wind turbine power generation and the power storage quantity of the charge/discharge device.

In accordance with a preferred aspect of the present invention, the aforementioned time cycle is 1 to 2 minutes.

Data obtained by moment-to-moment measurement of the power output fluctuation of wind turbine power generation shows that middle level peaks and troughs often appear at time cycle of 1 to 2 minutes. Therefore, it is reasonable to selectively carry out pumping up of water by the pumped-storage power generation mechanism supplied with electric power through the charge/discharge device or the hydraulic power generation using the head of water pumped by the pumped-storage power generation mechanism and transmission of the output power of the hydraulic power generation to the charge/discharge device at a time cycle of 1 to 2 minutes

In accordance with a preferred aspect of the present invention, the pumped-storage power generation mechanism generates an amount of power equal to that discharged to the distribution system and the generated power is discharged through the charge/discharge device to the distribution system during the first cycle just after the start of the selection.

No immediately preceding cycle exists just after the start of the selection. Therefore, it is desirable for the pumped-storage power generation mechanism to generate an amount of power equal to that being discharged to the distribution system and for the generated power to be discharged through the charge/discharge device to the distribution system during the first cycle just after the start of the selection.

In accordance with a preferred aspect of the present invention, the pumped-storage power generation mechanism comprises a pair of upper and lower storage tanks, and a pump/water turbine mechanism disposed midway of a communication passage between the upper storage tank and the lower storage tank, wherein the pump/water turbine mechanism comprises a pump/water turbine unit provided with a pair of impellers accommodated in a casing and disposed coaxially so as to rotate in directions opposite to each other, and a motor/generator unit provided with an inner/outer double rotational armatures-type motor/generator, and wherein each of the pair of impellers is connected to one of the inner/outer rotational armatures of the motor/generator unit.

A pumped-storage power generation mechanism can be constituted by a pair of upper and lower storage tanks, and a pump/water turbine mechanism disposed midway of a communication passage between the upper storage tank and the lower storage tank.

The pump/water turbine mechanism comprising a pump/water turbine unit provided with a pair of impellers accommodated in a casing and disposed coaxially so as to rotate in directions opposite to each other, and a motor/generator unit provided with an inner/outer double rotational armatures-type motor/generator, wherein each of the pair of impellers is connected to one of the inner/outer rotational armatures of the motor/generator unit, is characterized in that the pump/water turbine mechanism is operated in a condition wherein reciprocal rotational torques of the front impeller and the rear impeller are kept equal to each other, i.e., change in the angular momentum of the water flow passing through the front impeller is kept equal to that of the water flow passing through the rear impeller. Therefore, the aforementioned pump/water turbine mechanism can achieve axial inflow/outflow without aid of auxiliary devices such as guide vanes, etc., in either the pump operation or the water turbine operation. These features are advantageous for instantaneously and reliably switching pump (water pumping) operation to water turbine operation or water turbine operation to pump (water pumping) operation when such instantaneous switching becomes necessary.

### Brief Description of the Drawings

Figure 1 is a block diagram of a wind power generation system in accordance with a preferred embodiment of the present invention.
Figure 2 is a view showing an example of data obtained by moment-to-moment measurement of power output fluctuation of wind turbine power generation.
Figure 3 is a view showing fluctuation of one minute mean value of wind turbine power generation output created based on the measured data of Figure 2.
Figure 4 is a table showing a result of a simulation of wind power generation by a wind power generation system in accordance with a preferred embodiment of the present invention.
Figure 5 is a sectional view of a pump/water turbine mechanism preferable for the present invention.

### Modes for Carrying Out the Invention

A wind power generation system in accordance with a preferred embodiment of the present invention will be described.

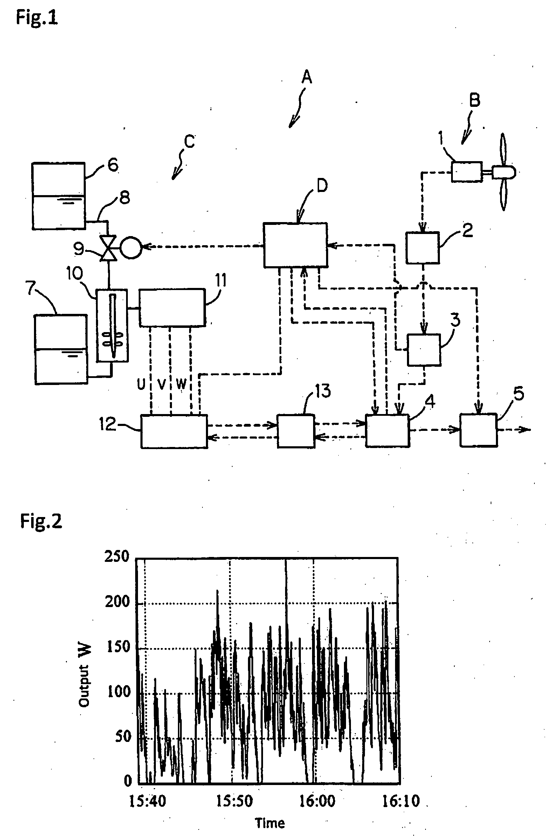

As shown in Figure 1, a wind power generation system A comprises a wind turbine power generation mechanism B, a pumped-storage power generation mechanism C and a control device D for controlling operations of the aforementioned mechanisms.

The wind turbine power generation mechanism B comprises a wind turbine generator 1, a wind turbine inverter 2 for converting A.C. power output of the wind turbine generator 1 to D.C. power output, a watt-hour meter 3, a charge/discharge device 4, and a system interconnection inverter 5 for converting D.C. power output of the charge/discharge device 4 to A.C. power output to a distribution system.

The pumped-storage power generation mechanism C comprises an upper storage tank 6, a lower storage tank 7, a communication passage 8 extending between the upper storage tank 6 and the lower storage tank 7, an electromagnetic valve 9 for opening and closing the communication passage 8, a pump/water turbine 10 disposed midway of the communication passage 8, an induction motor/generator 11 for driving the pump/water turbine 10 and being driven by the pump/water turbine 10, and a motor/generator inverter 12 for converting D.C. power output of the charge/discharge device 4 to excitation current (A.C.) for the induction motor/generator 11 and converting A.C. power output of the induction motor/generator 11 to D.C. power output.

The motor/generator inverter 12 and the charge/discharge device 4 are connected to each other through a bidirectional chopper 13.

Operation of the wind turbine power generator B will be described.

A.C. power output of the wind turbine generator 1 is converted to D.C. power output by the wind turbine inverter 2 to be transmitted to the charge/discharge device 4. (When the power output of the wind turbine generator 1 is D.C., the wind turbine inverter 2 can be omitted.) The power output value of the wind turbine generator 1 is detected by the watt-hour meter 3 to be inputted to the control device D. Power storage quantity of the charge/discharge device 4 is also inputted to the control device D. The control device D sends a command to the charge/discharge device 4 instructing it to output to the distribution system, and sends a voltage/wave frequency control command to the system interconnection inverter 5. Thus, D.C. power output of the charge/discharge device 4 is converted to predetermined voltage/predetermined frequency A.C. power output, and outputted to the distribution system.

Water turbine operation (hydraulic power generation operation) of the pumped-storage power generation mechanism C will be described.

The control device D sends an opening control command to the electromagnetic valve 9 instructing it to control the opening of the electromagnetic valve 9. The control device D sends an excitation current output command to the charge/discharge device 4, and sends an excitation voltage control command to the motor/generator inverter 12. D.C. power output of the charge/discharge device 4 is boosted in voltage by the bidirectional chopper 13, is then converted to three-phase A.C. current, adjusted in voltage, and adjusted in frequency by the motor/generator inverter 12, and is finally supplied to the motor/generator 11 as exciting current. A water current, whose flow rate is controlled by the electromagnetic valve 9, flows from the upper storage tank 6 through the communication passage 8 to the lower storage tank 7 so as to drive the pump/water turbine 10 disposed midway of the communication passage 8. The pump/water turbine 10 drives the motor/generator 11 to generate electric power. Three-phase A.C. power output of the motor/generator 11 is converted to D.C. power output by the motor/generator inverter 12, then reduced in voltage by the bidirectional chopper 13, and transmitted to the charge/discharge device 4.

Pump operation (water pumping up operation) of the pumped-storage power generation mechanism C will be described.

The control device D sends an excitation current output command to the charge/discharge device 4, and sends an excitation voltage control command and phase conversion command to the motor/generator inverter 12. D.C. power output of the charge/discharge device 4 is boosted in voltage by the bidirectional chopper 13, and then converted to three-phase A.C. current, adjusted in voltage, adjusted in frequency, and converted in phase by the motor/generator inverter 12. Two of three phases of the motor/generator inverter 12 are converted to each other due to phase conversion, rotational direction of the pump/water turbine 10 is reversed from that in the water turbine operation, and pump operation (water pumping up operation) is started. Just after the start of the pump operation, the control device D sends a wide-open command to the electromagnetic valve 9 instructing it to fully open the electromagnetic valve 9. Water stored in the lower storage tank 7 is driven up to the upper storage tank 6 to be stored in the upper storage tank 6.

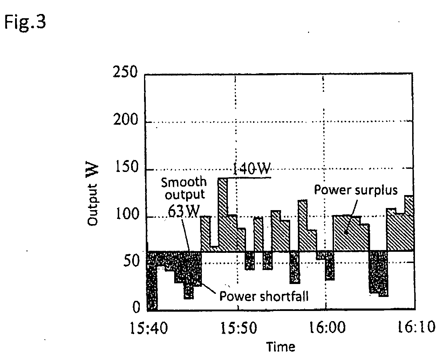

From 15:40 to 16:10 on a prescribed day, a field test was carried out on a wind turbine generator 1 equipped with an impeller 2m in diameter and having a rated output of 1.2kW. (under a wind speed of 11.5m/s) The test result is shown in Figure 2. Figure 2 shows raw data obtained by moment-to-moment measurement of the power output fluctuation of the wind turbine generator 1 during the field test. Figure 3 shows fluctuation of mean one minute power output of the wind turbine generator 1 derived from the raw data shown in Figure 2. In Figure 3, black domains indicate power shortfall in the case where smooth output to the distribution system was set at 63W, and hatched domains indicate surplus power in the case where smooth output to the distribution system was set at 63W.

A simulation will be carried out for operation of the wind power generation system A in the case where smooth output of 63W to the distribution system is maintained from 15:40 to 16:10 under the condition of the pumped-storage power generation mechanism C not being used, and only the wind turbine power generation mechanism B and the control device D being used. When the simulation is carried out under the assumption that power equal to a power shortfall of 3.56 Wh from 15:40 to 15:46 is stored in the charge/discharge device 4 at 15:40, power shortfall after 15:46 is covered by output of the charge/discharge device 4, and surplus power is stored in the charge/discharge device 4, it is found from the simulation that power of 7.15Wh is stored in the charge/discharge device 4 at 16:10 and the required electric storage capacity of the charge/discharge device 4 is 7.15 Wh.

It can be seen from Figure 2 that middle level peaks and troughs appear at a cycle of 1 to 2 minutes. In view of this phenomenon, a simulation will be carried out on operation of the wind power generation system A in the case where power generation by the wind turbine power generation mechanism B is continuously carried out, and pumping up of water by the pumped-storage power generation mechanism C or hydraulic power generation using the head of water pumped by the pumped-storage power generation mechanism C is selectively carried out at a cycle time of 1 minute so as to continuously maintain smooth output of 63W to the distribution system. The simulation is carried out under the following conditions.
(1) A pump/water turbine provided with lift and fall of 2m is used for the pump/water turbine 10. Energy efficiency of the pump/water turbine 10 during pump operation is set at 0.7 based on actual measurement, and energy efficiency of the pump/water turbine 10 during water turbine operation is set at 0.9 based on actual measurement. Therefore, if surplus output of 1Wh of wind power generation is converted to potential energy of water stored in the upper storage tank 6 by the pump operation of the pump/water turbine 10 and then the aforementioned potential energy is converted to electric power energy by water turbine operation of the pump/water turbine 10, electric power energy of 0.63Wh is obtained. Electric power necessary for driving the inverters 5, 12, electromagnetic valve 9 and the controlling device D is ignored because it is negligibly smaller than the smooth output to distribution system and the electric power necessary for driving the pump.
(2) It is assumed that the power storage quantity of the charge/discharge device 4 is zero at 15:40, and 1019 liters of water is stored in the upper storage tank 6. Potential energy of the 1019 liters of water in the upper storage tank 6 is converted to 5.0Wh of electric power by water turbine operation of the pump/water turbine 10 and driving of the motor/generator 11 by the pump/water turbine 10.
(3) Between 15:40 to 15:41, the pumped-storage power generation mechanism C generates an amount of power output equal to the 63W of power output to the distribution system, and the output power of the hydraulic power generation is discharged to the distribution system through the charge/discharge device 4 and the system interconnection inverter 5.

Selection at every 1 minute cycle between the pumping up of water by the pumped-storage power generation mechanism C and the hydraulic power generation using the head of water pumped by the pumped-storage power generation mechanism C is, as described below, carried out by a feedback system based on mean wind power generation output value during the preceding time cycle and the power storage quantity of the charge/discharge device at the end of the preceding time cycle. However, no immediately preceding cycle exists just after the start of the selection. Therefore, the pumped-storage power generation mechanism carries out hydraulic power generation so as to generates an amount of power equal to that being discharged to the distribution system and the generated power is discharged through the charge/discharge device 4 and the system interconnection inverter 5 to the distribution system during the first cycle just after the start of the selection.
(4) During every one minute cycle after 15:41, pumping up of water by the pumped-storage power generation mechanism C supplied with electric power from the charge/discharge device 4 or hydraulic power generation using the head of water pumped by the pumped-storage power generation mechanism C and transmission of the output power of the hydraulic power generation to the charge/discharge device 4 is selectively carried out with consideration to the mean wind power generation output value during the preceding one minute and the power storage quantity of the charge/discharge device 4 at the end of the preceding one minute.

More specifically, if the mean wind power generation output value during the preceding one minute is less than 63W, the pumped-storage power generation mechanism C carries out hydraulic power generation during the next one minute so as to supply the power shortfall during the preceding one minute, and power output of 63W is discharged to the distribution system.

If the mean wind power generation output value during the preceding one minute is equal to or larger than 63W and the power storage quantity of the charge/discharge device 4 at the end of the preceding one minute is equal to or less than 3Wh, the pumped-storage power generation mechanism C does not carry out hydraulic power generation or pumping up during the next one minute.

If the mean wind power generation output value during the preceding one minute is equal to or larger than 63W and the power storage quantity of the charge/discharge device 4 at the end of the preceding one minute is larger than 3Wh, the pumped-storage power generation mechanism C does not carry out hydraulic power generation but is supplied with stored electricity from the charge/discharge device 4 in the amount of the excess over 3Wh so as to carry out pumping up of water, thereby converting the excess amount of stored electricity to potential energy of water stored in the upper storage tank 6.

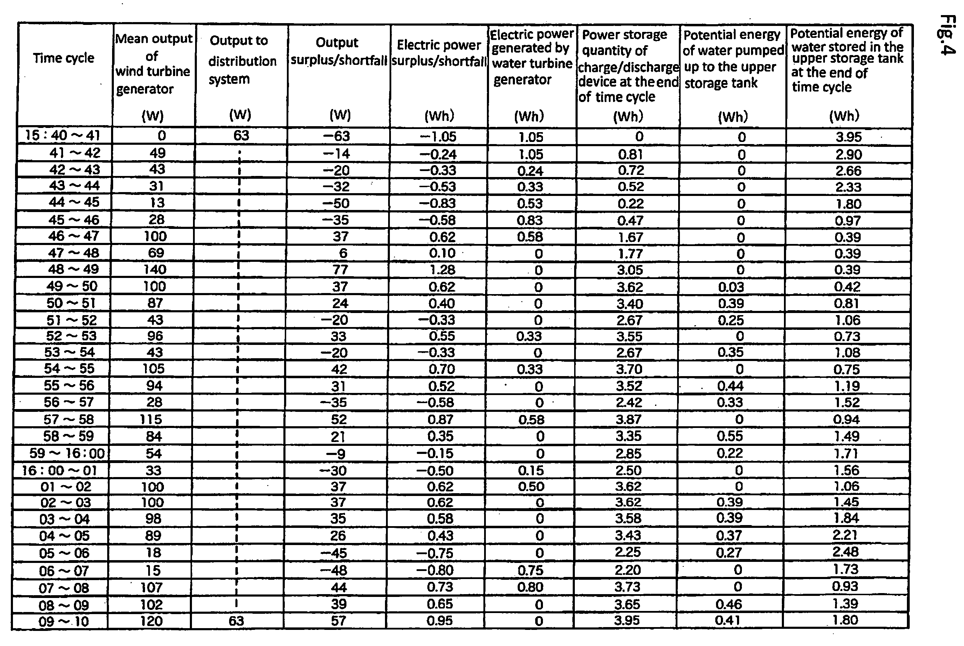

The result of the simulation is shown in Figure 4. In Figure 4, energy levels (Wh) listed in the column of potential energy of water pumped up to the upper storage tank and the column of potential energy of water stored in the upper storage tank at the end of every time cycle are those after conversion to electric energy by hydraulic power generation using the head of pumped water.

As can be seen from Figure 4, the maximum level of the amount of electricity stored in the charge/discharge device 4 is 3.95Wh at 16:10. 367 liters of water is stored in the upper storage tank at 16:10.

In the aforementioned simulation, setting the storage capacity of the charge/discharge device 4 at 3.95Wh makes it possible to maintain continuous smooth supply of 63W of power output to the distribution system by selectively carrying out at a time cycle of one minute pumping up of water by the pumped-storage power generation mechanism C or hydraulic power generation using the head of water pumped by the pumped-storage power generation mechanism C, which means that continuous smooth supply of 63W of power output to the distribution system can be maintained even if the storage capacity of the charge/discharge device 4 is reduced to half of that when 63W of output power is continuously supplied smoothly to the distribution system only by the wind turbine power generation mechanism B.

From the result of the aforementioned simulation it follows that:
(1) It is effective for minimizing capacity enhancement of the charge/discharge device to add a pumped-storage power generation mechanism to a wind power generation system comprising a wind turbine power generation mechanism and a charge/discharge device, wherein charging of the charge/discharge device with output power of the wind power generation mechanism works cooperatively with discharging of the power through the charge/discharge device to a distribution system so as to smooth the power output to the distribution system, thereby supplying the pumped-storage power generation mechanism with power from the charge/discharge device so as to pump up water, enabling the pumped-storage power generation mechanism to use the head of pumped water so as to generate power by hydraulic power generation and transmit power output to the charge/discharge device, and selectively carrying out at a relatively short predetermined time cycle the pumping up of water or the hydraulic power generation and power transmission. The present pumped-storage power generation mechanism is lower in operation cost, simpler in structure, longer in service life, and far better in maintainability than power storage systems such as, inter alia, the NaS battery, which requires large scale peripheral equipment for maintaining a temperature environment of higher than 300 °C, and the Li ion battery, which is expensive, has a long charge/discharge time and easily deteriorates. The aforesaid electrical capacitors are very hard to enhance in capacity. The present pumped-storage power generation mechanism can be freely changed in processing capacity by changing the fall/lift-height, capacity of the tanks, or fluid density, and can be used for wind power generation plants irrespective of their size and type. The present pumped-storage power generation mechanism can serve a plurality of wind power generation plants collectively and integrally. The present wind power generation system can smooth power output to the distribution system more economically than a conventional wind power generation system wherein power output to the distribution system is smoothed by the charge/discharge device only. When the aforementioned selection is carried out by a feedback system based on mean wind power generation output value during the preceding time cycle and the power storage quantity of the charge/discharge device at the end of the preceding time cycle, it becomes possible to carry out the aforementioned selection in response to moment-to-moment fluctuation of the power output value of the wind turbine power generation and the power storage quantity of the charge/discharge device.
(2) Conventional pumped-storage power generation has been used for smoothing of power supply during a long timespan such as a day, night, etc. On the other hand, in the present invention, the pumped-storage power generation is used for smoothing moment-to-moment fluctuation of power output of the wind turbine power generation by selectively carrying out, at a relatively short predetermined time cycle, pumping up water by the pumped-storage power generation mechanism supplied with electric power through the charge/discharge device or the hydraulic power generation using the head of water pumped by the pumped-storage power generation mechanism and transmission of output power to the charge/discharge device.
(3) As can be seen from Figure 2, middle level peaks and troughs often appear at a time cycle of 1 to 2 minutes in moment-to-moment fluctuation of the power output of the wind turbine power generation. Therefore, it is reasonable to selectively carry out pumping up of water by the pumped-storage power generation mechanism or the hydraulic power generation using the head of water pumped by the pumped-storage power generation mechanism and transmission of output power to the charge/discharge device at a time cycle of 1 to 2 minutes.

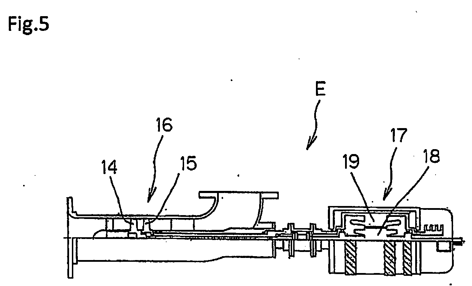

The pump/water turbine 10 and the induction motor/generator 11 can be constituted by a pump/water turbine mechanism E as shown in Figure 5. The pump/water turbine mechanism E comprises a pump/water turbine unit 16 provided with a pair of impellers 14 and 15 accommodated in a casing and disposed coaxially to rotate in opposite directions, and a motor/generator unit 17 comprising an inner/outer double rotational armatures-type motor, wherein the pair of impellers 14 and 15 are connected to the inner and the outer rotational armatures 18 and 19 of the motor/generator unit 17 respectively. The pump/water turbine mechanism E is characterized in that the pump/water turbine mechanism is operated in a condition wherein reciprocal rotational torques of the front impeller 14 and the rear impeller 15 are kept equal to each other, i.e., change in the angular momentum of the water flow passing through the front impeller 14 is kept equal to that of the water flow passing through the rear impeller 15. Therefore, the pump/water turbine mechanism E can achieve axial inflow/outflow without aid of auxiliary devices such as guide vanes, etc., in either of the pump operation or the water turbine operation. These features are advantageous for instantaneously and reliably switching pump (water pumping) operation to water turbine (power generation) operation or water turbine operation to pump operation when such instantaneous switching becomes necessary. Details of the pump/water turbine mechanism E are disclosed in Japanese Patent Publication No. 4245240.

The induction motor/generator 11 can be replaced with a permanent magnet synchronous generator. In this case, exciting current need not be supplied from the charge/discharge device 4 to the permanent magnet synchronous generator.

The manner in which pumping up of water by the pumped-storage power generation mechanism or hydraulic power generation using the head of water pumped by the pumped-storage power generation mechanism and transmission of output power to the charge/discharge device is selectively carried out with consideration to moment-to-moment fluctuation of the power output value of the wind turbine power generation and moment-to-moment fluctuation of the power storage quantity of the charge/discharge device is not restricted to the aforementioned one. The time cycle of controlling, the water storage quantity of the upper storage tank 6 and the power storage quantity of the charge/discharge device 4 at the start of controlling, the power storage quantity of the charge/discharge device 4 depending on which selection of pump operation is decided, etc., can be chosen appropriately.

### Industrial Applicability

The present invention can be widely used in both new and existing wind power generation plants.

### Brief Description of the Reference Numerals

- A: Wind power generation system
- B: Wind turbine power generation mechanism
- C: Pumped-storage power generation mechanism
- D: Control device
- E: Pump/water turbine mechanism
- 1: Wind turbine power generator
- 2: Wind turbine inverter
- 3: Watt-hour meter
- 4: Charge/discharge device
- 5: System interconnection inverter
- 6: Upper storage tank
- 7: Lower storage tank
- 8: Communication passage
- 9: Electromagnetic valve
- 10: Pump/water turbine
- 11: Induction motor/generator
- 12: Motor/generator inverter
- 13: Bidirectional chopper
- 14,: 15 Impeller
- 16: Pump/water turbine unit
- 17: Motor/generator unit
- 18,19: Rotational armature

## Claims

1. A wind power generation system (A) comprising a wind turbine power generation mechanism (B) and a charge/discharge device (4), **characterized in that** charging of the charge/discharge device (4) with output power of the wind power generation mechanism (B) works cooperatively with discharging of the power through the charge/discharge device (4) to a distribution system so as to smooth the power output to the distribution system, and further comprising a pumped-storage power generation mechanism (C), and wherein pumping up of water by the pumped-storage power generation mechanism (C) supplied with power from the charge/discharge device (4) or hydraulic power generation using a head of pumped water by the pumped-storage power generation mechanism (C) and transmission of output power to the charge/discharge device (4) is selectively carried out at a relatively short predetermined time cycle of a few tens of seconds to a few minutes, and the selection is carried out based on mean wind power generation output value during a preceding time cycle and power storage quantity of the charge/discharge device (4) at the end of the preceding time cycle.

2. A wind power generation system (A) of claim 1, wherein the time cycle is 1 to 2 minutes.

3. A wind power generation system (A) of claim 1 or 2, wherein the pumped-storage power generation mechanism (C) generates an amount of power equal to that discharged to the distribution system and the generated power is discharged through the charge/discharge device (4) to the distribution system during the first cycle just after a start of the selection.

4. A wind power generator of any one of claims 1 to 3, wherein the pumped-storage power generation mechanism (C) comprises a pair of upper and lower storage tanks (6, 7), and a pump/water turbine mechanism (E) disposed midway of a communication passage (8) between the upper storage tank (6) and the lower storage tank (7), wherein the pump/water turbine mechanism (E) comprises a pump/water turbine unit (16) provided with a pair of impellers (14, 15) accommodated in a casing and disposed coaxially so as to rotate in directions opposite to each other, and a motor/generator unit (17) provided with an inner/outer double rotational armatures-type motor/generator, and wherein each of the pair of impellers (14, 15) is connected to one of the inner/outer rotational armatures (18, 19) of the motor/generator unit (17).

## Patentansprüche

1. Ein Windstromerzeugungssystem (A) mit einem Windturbinenstromerzeugungsmechanismus (B) und einer Lade/Entlade-Vorrichtung (4), **dadurch gekennzeichnet, dass** eine Aufladung der Lade/Entlade-Vorrichtung (4) durch einer Ausgangsleistung des Windstromerzeugungsmechanismus (B) mit einer Entladung der Energie durch die Lade/Entlade-Vorrichtung (4) an das Verteilungssystem kooperativ läuft, um die Leistungsausgabe an das Verteilungssystem zu vergleichmäßigen, und das Windstromerzeugungssystem (A) ferner einen Pumpspeicherstromerzeugungsmechanismus (C) aufweist, wobei das Hochpumpen des Wassers durch den Pumpspeicherstromerzeugungsmechanismus (C), der mit der Energie aus der Lade/Entlade-Vorrichtung (4) versorgt wird, oder hydraulische Stromerzeugung mittels der Höhe des hochgepumpten Wassers durch den Pumpspeicherstromerzeugungsmechanismus (C), und den Transport der Ausgangsleistung zur Lade/Entlade-Vorrichtung (4) in einem relativ kurzen vorbestimmten Zeitzyklus von einigen zehn Sekunden bis zu einigen Minuten selektiv durchgeführt wird, und die Selektion basierend auf einem durchschnittlichen Windstromerzeugungsausgabewert während einem vorangehenden Zeitzyklus und einer Energiespeichermenge der Lade/Entlade-Vorrichtung (4) am Ende des vorangehenden Zeitzyklus durchgeführt wird.

2. Windstromerzeugungssystem (A) nach Anspruch 1, wobei der Zeitzyklus eine bis zwei Minuten beträgt.

3. Ein Windstromerzeugungssystem (A) nach Anspruch 1 oder 2, wobei der Pumpspeicherstromerzeugungsmechanismus (C) eine Energiemenge gleich derjenige, die an das Verteilungssystem entladen wird, erzeugt und die erzeugte Energie durch die Lade/Entlade-Vorrichtung (4) an das Verteilungssystem während des ersten Zyklus unmittelbar nach einem Start der Selektion entladen wird.

4. Ein Windstromerzeuger nach einem der Ansprüche 1 bis 3, wobei der Pumpspeicherstromerzeugungsmechanismus (C) ein Paar von oberen und unteren Speicherbehälter (6, 7) und einen Pump/Wasser-Turbinenmechanismus (E) aufweist, der in der Mitte eines Kommunikationskanals (8) zwischen dem oberen Speicherbehälter (6) und dem unteren Speicherbehälter (7) angeordnet ist, wobei der Pump/Wasser-Turbinenmechanismus (E) eine Pump/Wasser-Turbineneinheit (16), die mit einem Paar von Antriebsrädern (14, 15) versehen ist, die in einem Gehäuse aufgenommen sind und koaxial angeordnet sind, sodass sie sich in entgegengesetzten Richtungen gegeneinander drehen, und eine Motor/Generatoreinheit (17) aufweist, die mit einem Inneren/Äußeren-Doppelrotationsankertyp-Motor/Generator versehen ist, wobei jedes des Paars von Antriebsrädern (14, 15) mit einem der Inneren/Äußeren-Doppelrotationsanker (18, 19) der Motor/Generatoreinheit(17) verbunden ist.

## Revendications

1. Système de génération d'énergie éolienne (A) qui comprend un mécanisme de génération d'énergie éolienne (B) et un dispositif de chargement/déchargement (4), **caractérisé en ce que** le chargement du dispositif de chargement/déchargement (4) avec une puissance de sortie du mécanisme de génération d'énergie éolienne (B) fonctionne en coopération avec le déchargement de l'énergie par le dispositif de chargement/ déchargement (4) vers un système de distribution de façon à lisser l'énergie fournie au système de distribution, et qui comprend en outre un mécanisme de génération d'énergie de stockage pompée (C), et dans lequel le pompage de l'eau par le mécanisme de génération d'énergie de stockage pompée (C) alimenté en énergie qui provient du dispositif de chargement/déchargement (4) ou une génération d'énergie hydraulique à l'aide d'une charge d'eau pompée par le mécanisme de génération d'énergie de stockage pompée (C) et la transmission de la puissance de sortie au dispositif de chargement/déchargement (4) est sélectivement effectuée pendant une durée prédéterminée relativement courte de quelques dizaines de secondes à quelques minutes, et la sélection est effectuée sur la base d'une valeur de sortie de génération d'énergie éolienne moyenne pendant une période de temps précédente, et de la quantité de stockage d'énergie du dispositif de chargement/déchargement (4) à la fin de la période de temps précédente.

2. Système de génération d'énergie éolienne (A) selon la revendication 1, **caractérisé en ce que** la durée est de 1 à 2 minutes.

3. Système de génération d'énergie éolienne (A) selon la revendication 1 ou 2, **caractérisé en ce que** le mécanisme de génération d'énergie de stockage pompée (C) génère une quantité d'énergie égale à celle déchargée vers le système de distribution, et l'énergie générée est déchargée par le dispositif de chargement/déchargement (4) vers le système de distribution pendant le premier cycle, juste après le début de la sélection.

4. Générateur d'énergie éolienne selon l'une quelconque des revendications 1 à 3, **caractérisé en ce que** le mécanisme de génération d'énergie de stockage pompée (C) comprend une paire de réservoirs de stockage supérieur et inférieur (6, 7) et un mécanisme de pompe/de turbine à eau (E) disposé à mi-chemin d'un passage de communication (8) entre le réservoir de stockage supérieur (6) et le réservoir de stockage inférieur (7), **caractérisé en ce que** le mécanisme de pompe/de turbine à eau (E) comprend une unité de pompe/de turbine à eau (16) munie d'une paire de pales (14, 15) placées dans une enceinte et disposées coaxialement de façon à tourner dans des directions opposées, et une unité de moteur/générateur (17) munie d'un moteur/générateur à armatures de rotation doubles internes/externes, et dans lequel chacune de la paire de pales (14, 15) est reliée à l'une des armatures de rotation internes/externes (18, 19) de l'unité de moteur/générateur (17).
